Europäisches Patentamt

(19)　European Patent Office

Office européen des brevets

(11)　**EP 0 727 396 B1**

## (12)　FASCICULE DE BREVET EUROPEEN

(45) Date de publication et mention
de la délivrance du brevet:
**04.08.1999 Bulletin 1999/31**

(51) Int. Cl.$^6$: **C03C 17/22**, C03C 17/25,
C03C 25/02, C04B 41/50

(21) Numéro de dépôt: **96400315.6**

(22) Date de dépôt: **15.02.1996**

(54) **Composition d'ensimage céramifiable pour fils continus minéraux, fils revêtus de cette composition et procédé d'ensimage et de traitement thermique mettant en oeuvre cette composition**

Keramisierbares Schlichtemittel für mineralische Endlosfasern, mit dem Mittel beschichtete Fasern, Schlichte-Verfahren und Wärmebehandlung zur Anwendung des Mittels

Ceramicizable size composition for continuous mineral filaments, filaments coated with composition and sizing process and heat treatment using the composition

(84) Etats contractants désignés:
**AT BE DE ES GB IT NL PT SE**

(30) Priorité: **16.02.1995 FR 9501777**

(43) Date de publication de la demande:
**21.08.1996 Bulletin 1996/34**

(73) Titulaire: **QUARTZ & SILICE**
**77140 St Pierre Les Nemours (FR)**

(72) Inventeur: **Molins, Laurent J.A.**
**77140 Nemours (FR)**

(74) Mandataire: **Aron, Georges et al**
**Cabinet de Boisse**
**37, Avenue Franklin D. Roosevelt**
**75008 Paris (FR)**

(56) Documents cités:
EP-A- 0 019 469　　EP-A- 0 294 830
DE-A- 1 421 912　　DE-A- 4 117 041
DE-B- 1 494 898　　FR-A- 2 335 553
US-A- 3 232 782　　US-A- 3 451 886
US-A- 3 582 395　　US-A- 3 627 565

- CHEMICAL ABSTRACTS, vol. 119, no. 12, 20 Septembre 1993 Columbus, Ohio, US; abstract no. 123496z, page 426; XP002005495 & JP-A-05 124 818 (NISSAN CHEM IND LTD) 21 Mai 1993
- DATABASE WPI Section Ch, Week 9218 Derwent Publications Ltd., London, GB; Class A26, AN 92-148043 XP002005496 & JP-A-04 091 178 ( UBE INDUSTRIES KK) , 24 Mars 1992

Remarques:
Le dossier contient des informations techniques présentées postérieurement au dépôt de la demande et ne figurant pas dans le présent fascicule.

## Description

L'invention concerne une composition d'ensimage céramifiable pour fils continus en matière minérale, les fils continus minéraux revêtus de cette composition, et un procédé d'ensimage et de traitement thermique mettant en oeuvre cette composition.

Par l'expression "fils continus minéraux", on entend ici tous les produits fibreux continus tels que fils, fibres et filaments et analogues, constitués d'un verre, de silice ou d'un matériau céramique.

Les fils continus de verre englobent notamment ceux formés de verre E (comportant plus de 52% en poids de $SiO_2$), et de verres R, RH, S et D (comportant plus de 60% en poids de $SiO_2$). Ces fils peuvent être obtenus, par exemple, par étirage à partir d'une masse fondue de verre.

Les fils continus de silice comprennent ceux dont la composition contient plus de 96% en poids de silice tel que les fils de silice fondue, les fils de verre lavé, les fils de silice obtenus par filage de silicate ou par la voie sol-gel, ou les fils de silice obtenus par étirage d'une préforme.

Les fils continus céramiques comprennent ceux dont la composition est à base d'au moins un oxyde, un nitrure, un carbure de métal ou un mélange ou composé de ceux-ci, en particulier d'au moins un oxyde, nitrure ou carbure d'aluminium, de silicium, de zirconium, de titane, de bore ou d'yttrium. Ces fils peuvent être obtenus par exemple par préparation d'un gel (par le procédé sol-gel) ou d'un silicate et filage au travers d'une filière.

Les fils continus minéraux sont utilisés dans des applications d'isolation de câbles, de barrière anti-feu, de rideaux de fours, et d'isolation d'éléments chauffants, entre autres, mais présentent l'inconvénient de perdre toute flexibilité en raison, par exemple, d'une cristallisation très rapide. Aussi ces produits sont la plupart du temps utilisés dans des applications statiques à des températures inférieures à 1000°C.

Divers procédés ont été décrits afin d'atténuer la dégradation des propriétés mécaniques et thermique des fils continus minéraux sous l'effet de la chaleur. Ces procédé sont basés sur la formation d'un revêtement céramique protecteur sur les fils à partir d'une composition d'ennoblissement appliquée sur le fil.

Ainsi, US-A-3 232 782 décrit un procédé qui consiste à revêtir la surface d'un corps vitreux constitué principalement de silice par une solution d'un sel acide d'un des métaux Cr, Al, Zr, Ti, Be, Mg et à transformer in situ ce sel en oxyde ou en silicate.

Pour réaliser cet objectif, le corps vitreux (tissu de fibres de verre) est d'abord lixivié par un acide (HCl, $H_2SO_4$), puis chauffé à 871°C pendant deux heures, plongé rapidement dans une solution dudit sel (l'acétate et le sulfate de Cr sont mentionnés dans les exemples), plongé dans une autre solution (acide silicique, hydroxyde d'ammonium), et séché. Il se forme à la surface des fibre ainsi traitées, une couche gélatineuse d'hydroxyde ou de silicate qu'un traitement thermique permet de transformer en une couche d'oxyde protectrice.

GB-A-1 041 996 décrit le traitement de fibres de silice, mais surtout de tissus réalisés à partir de ces fibres par une solution aqueuse d'un sel organique de chrome (tel que l'acétate ou le formiate de Cr). Il est précisé qu'un tel composé est obligatoire si l'on veut obtenir une bonne liaison du revêtement sur les fibres. L'opération doit en général être répétée plusieurs fois. Puis on chauffe le produit ainsi traité à 1093°C en atmosphère oxydante pour former une couche de sesquioxyde de chrome.

US-A-3 725 117 décrit un procédé selon lequel un corps à base de silice (un tissu dans les exemples) est traité par une solution obtenue en faisant réagir de l'acide oxalique et du bichromate d'ammonium. Le corps ainsi revêtu est traité thermiquement (de 815 à 1093°C en atmosphère oxydante) ce qui provoque la formation à sa surface d'une couche régulière de $Cr_2O_3$.

EP-A-0019469 décrit un procédé pour former une couche de $Cr_2O_3$ sur des fibres céramiques (par exemple contenant, en poids, 40-100% d'$Al_2O_3$ et 0 à 60% de $SiO_2$) par mise en contact des fibres avec une solution contenant O,1 à 20% en poids d'ions Cr, puis élévation du pH de cette solution à 9,5 (par ajout ou formation de $NH_4OH$) ce qui a pour effet de précipiter $Cr_2O_3.xH_2O$. Enfin, on évapore l'eau restante et on chauffe à 200-1200°C pour convertir $Cr_2O_3.xH_2O$ en $Cr_2O_3$.

Il est par ailleurs, d'usage général, d'appliquer une composition d'ensimage à un fil continu minéral, dès sa formation, afin premièrement de permettre l'étirage des filaments et deuxièmement d'améliorer son ouvrabilité, c'est-à-dire son aptitude à subir les diverses opérations textiles telles que tissage, bobinage et tressage requise pour le transformer en articles tels que tresses, tissus, tricots et autres.

L'ensimage permet d'assurer la cohésion du fil et joue également un rôle de lubrifiant.

La mise en oeuvre d'un procédé de formation d'un revêtement céramique protecteur ne peut être effectuée sur un fil ensimé par suite d'un défaut d'adhérence, et il est nécessaire de désensimer le produit transformé (tel que tissu, tresse, tricot ou nappe) avant d'appliquer la composition d'ennoblissement. En outre, l'application d'une composition d'ennoblissement sur des formes textiles complexes (tissu tubulaire, chaussette, tissu conique, tresse, etc ...) est très difficile.

Il serait donc extrêmement utile de disposer d'une composition unique remplissant à la fois le rôle d'une composition d'ensimage et d'une composition d'ennoblissement du genre décrit ci-dessus, qui puisse être appliquée sur le fil continu avant de soumettre ce dernier à des opérations textiles.

Une telle composition permettrait notamment de produire facilement des articles textiles complexes revêtus d'une composition d'ennoblissement du genre précité.

La présente invention vise justement à fournir une telle composition.

Plus précisément, l'invention concerne une composition d'ensimage céramifiable caractérisée en ce qu'elle comprend en % en poids :

a) 5,5 à 20% d'au moins un sel de métal hydrosoluble choisi parmi les sels de chrome, de zirconium, de titane et d'aluminium ;

b) 0,2 à 15% d'au moins un agent liant ;

c) 0,15 à 3% d'au moins un silane conférant au fil continu minéral de bonnes propriétés de résistance à l'abrasion et de résistance à la traction sur fil sec ;

d) 0,6 à 17% d'au moins un agent lubrifiant ; et

e) de l'eau pour le complément.

Facultativement, la composition peut contenir, en outre, jusqu'à 2% en poids d'au moins un additif (f) connu usuel, par exemple, une cire, un plastifiant, un agent antistatique, un agent tensio-actif, un émulgateur, etc ...

Des compositions formées des ingrédients ci-dessus mais en des proportions se situant en dehors des gammes sus-mentionnées ne donnent pas des résultats satisfaisants, soit qu'on n'obtienne que peu ou pas d'amélioration des propriétés de résistance thermique, soit que les fils soient difficiles ou impossibles à traiter par les opérations textiles usuelles.

De préférence, la composition comprend, en % en poids :

10-18% d'ingrédient (a),

1-6% d'ingrédient (b),

0,4-1,8% d'ingrédient (c),

1,5-10% d'ingrédient (d), cet ingrédient (d) étant constitué d'huile soluble à raison de 0,3 à 4% et d'huile émulsifiée à raison de O,3 à 6%,

0,1-1% de cire, et

0,1-1% de plastifiant, et

de l'eau pour le complément.

Une composition particulièrement préférée comprend, en % en poids, environ :

15% d'ingrédient (a),

3% d'ingrédient (b),

1% d'ingrédient (c),

2% d'huile soluble,

3% d'huile émulsifiée,

0,5% de cire, et

0,5% de plastifiant, et

de l'eau pour le complément.

L'ingrédient (a) est choisi parmi les sels hydrosolubles de chrome, de zirconium, de titane et d'aluminium, par exemples les chlorures, nitrates, sulfates, et acétates de ces métaux. Des exemples spécifique préférés sont $CrCl_3.6H_2O$, $AlCl_3.6H_2O$, l'acétate de zirconium et l'oxysulfate de titane hydraté.

L'ingrédient (a) est le constituant de base qui permettra de former un revêtement céramique protecteur sur le fil. Il en faut au moins 5,5% car en dessous de ce minimum, on n'obtient pas une protection thermique du fil suffisante. Au-delà de 20%, l'ouvrabilité du fil chute rapidement.

L'ingrédient (b) est un liant qui peut être choisi parmi un grand nombre de substance liantes connues. Il faut cependant que ce liant ait très peu de caractère collant ou poisseux résiduel et forme une pellicule relativement souple sur le fil après évaporation de l'eau. On peut, par exemple, utiliser des liants polymères tels que des polyesters, des époxy-esters, des polymères méth(acryliques), des polyuréthannes, des polyuréthanes à fonctions isocyanates, des polyamides, ou des résines époxy, des copolymères chlorure de vinylidène-acrylate, en particulier sous forme d'émulsions. Des exemples spécifiques de liants utilisables sont, à titre non limitatif, une résine polyamide à base de polyamines et d'acide gras avec un indice d'amine de 385 mg de KOH/mg de résine, une émulsion de résine époxy d'un poids moléculaire moyen en nombre de 350 et d'un poids équivalent d'époxy de 300 g, une émulsion de résine de polyépoxyester d'un poids moléculaire moyen en nombre de 7400 et d'un poids équivalent d'époxy de 5600g, une émulsion de copolymère d'acétate de polyvinyle époxydé, une émulsion de résine acrylique d'une viscosité de 100 mPa.s, et une dispersion de copolymère de chlorure de vinylidène et d'un acrylate. On peut aussi utiliser des liants d'origine naturelle tels que les amidons.

Le rôle du liant (b) est d'assurer la cohésion des fibres constituant les fils pendant les opérations de transformation textile. Il faut au moins 0,2% de liant pour obtenir un effet notable. Au delà de 15%, l'ouvrabilité du fil est affectée.

L'ingrédient (c) peut être choisi parmi les divers types de silanes connus pour donner de bonnes propriétés de résistance à l'abrasion et de résistance à la traction sur fil sec aux fils minéraux sur lesquels on les applique. Ces silanes sont habituellement des composés comportant des groupes organofonctionnels, tels que des groupes amine, alcoxy, époxy, sulfure, méthacryle, vinyl, uréido, ou isocyanate. Des exemples spécifiques de silanes utilisables sont le gamma-aminopropyltriéthoxysilane, le gamma-glycidoxypropyltriméthoxysilane, le bêta(3,4-époxycyclohexyl) éthyltriméthoxysilane, le gamma-méthacryloxy-propyltriméthoxysilane, l'hexadécyltriméthoxysilane, le cyclohexényléthyltriméthoxysilane et le chlorhydrate de N'-benzyl-bêta-aminoéthyl-propylammonium triméthoxysilane, parmi beaucoup d'autres.

Au-dessous de O,15% de silane, son effet devient négligeable. Au-delà de 3%, on n'observe pas d'amélioration supplémentaire des propriétés.

L'ingrédient (d) est constitué d'au moins une huile lubrifiante choisie parmi les huiles solubles et les huiles émulsifiées. Des exemples spécifiques de telles huiles sont les polyalkylène-glycols, l'huile de vaseline, les huiles de silicone (comme un diméthylpolysilicone d'une viscosité de 350 mPa.s à 25°C), les huiles minérales avec des éthoxylats de nonylphénol et d'alcools gras, et des sels d'amine tertiaire. On préfère utiliser un ingrédient (d) constitué d'au moins une huile soluble et d'au moins une huile émulsifiée. Il faut au moins O,6% de lubrifiant (d) pour obtenir une lubrification du fil convenable. Au-delà de 17%, il y a trop de lubrifiant et l'ouvrabilité du fil en souffre.

Le ou les ingrédients facultatifs (f) sont choisis parmi les divers types d'additifs habituellement utilisés dans les compositions d'ensimage. Les plus courants sont des cires, des plastifiants et des agents anti-statiques. Un exemple de plastifiant est la glycérine. Des exemples de cires sont des polyoxyéthylène glycols, un polyoxyalkylène époxydé d'un point de fusion de 40 à 50°C, des imidazolines (comme une alkyl imidazoline produite par réaction de tétraéthylène pentamine et d'acide stéarique ayant un point de gel de 32 à 38°C). Un exemple d'agent antistatique est l'acide tridécylphosphorique.

Il est à noter que de nombreux produits disponibles dans le commerce sont susceptible d'être utilisés comme ingrédients de la présente composition. Citons par exemple :

- Ingrédient (a) : le chlorure d'aluminium hydraté (Société MERCK-CLEVENOT, Nogent-Sur-Marne, FRANCE), l'acétate de zirconium (Société Hoescht, Paris la Défense, FRANCE), l'oxysulfate de titane hydraté (Société Aldrich-Chimie, Strasbourg, FRANCE).
- Ingrédient (b) : les produits AMAIZO$^®$5, AMAIZO$^®$71 et AMAIZO$^®$2213 vendus par la Société AMERICAN MAIZE PRODUCTS COMPANY, Hammond, Indiana, USA ; les produits DIOFAN$^®$ A 564 S et ACRONAL$^®$ 250D vendus par la Société BASF FRANCE, Levallois-Perret, FRANCE ; le produit FULATEX$^®$ 3769B vendu par la Société H.B. Fuller, GmbH, Munich, ALLEMAGNE ; le produit AMIDE 14 vendu par la Société RONDOT S.A., Champagne au Mont d'Or, FRANCE ; les produits NEOXIL 961 et 965 vendus par la Société D.S.M. ITALIA, Come, ITALIE, le produit ACRYMUL$^®$AM219 R vendu par la Société PROTEX, Levallois-Perret, FRANCE.
- Ingrédient (c) : les produits A 1100, A 1128, A 174, A 187 et A 186 vendus par la Société OSI SPECIALTIES (UK) LTD., Harefield, Middlesex, GRANDE-BRETAGNE ; les produits AMEO$^®$, DYNASYLAN 9116 et 6281 vendus par la Société HULS AG, Marl, ALLEMAGNE ; et le produit Z6032 vendu par la Société DOW CORNING FRANCE S.A., Lyon, FRANCE.
- Ingrédient (d) : les produits NS 703 et NS 704 vendus par la Société CONDAT, Châsse Rhône, FRANCE ; les produits AMMONYX$^®$ LO, NM 1350, et AMISIL$^®$ vendus par la Société RONDOT S.A. ; les produits FIBER LUBRICANT 1498 et 9649 vendus par la Société BENJAMIN R. VICKERS and SONS LTD., Leeds, GRANDE-BRETAGNE ; le produit ENSOLINE$^®$ 738 A vendu par la Société CECA, Paris la Défense, FRANCE ; le produit SM 2128 vendu par la Société GENERAL ELECTRIC, Cergy-Pontoise, FRANCE.
- Ingrédient (f) : la cire NOVEPOX TAN 117 vendu par la Société PROTEX ; la cire AMIWAX$^®$ ou CATION$^®$ X vendues par la Société RONDOT S.A. ; les plastifiants du type de la glycérine vendue par la Société AMI, Saint Mammès, FRANCE.

La composition de l'invention s'obtient en ajoutant, selon les règles de l'art et les recommandations des fournisseurs, les divers ingrédients qui la composent dans de l'eau, sous agitation vigoureuse. La composition finale est formée d'une solution et d'un peu d'émulsion. On utilise de préférence de l'eau désionisée, comme ingrédient (e), pour minimiser la présence de composés de métaux alcalins, afin d'éviter la formation de cristaux de cristobalite ou de tridymite à la surface des fils, après céramification.

L'invention concerne également un procédé d'ensimage et de traitement thermique de fils continus minéraux mettant en oeuvre la composition de l'invention. Ce procédé comprend les étapes consistant à :

(i) appliquer une couche de la composition de l'invention sur un fil continu minéral ;
(ii) traiter le fil revêtu résultant avec une solution aqueuse basique pour convertir le sel de métal (a) en hydroxyde de métal ; et
(iii) chauffer le fil revêtu résultant de l'étape (ii) à une température supérieure à 400°C pendant un temps suffisant pour convertir l'hydroxyde de métal en oxyde de métal.

Dans l'étape (i), la composition est appliquée sur le fil, par tout dispositif d'ensimage usuel (rouleau applicateur, pulvérisateur, par exemple). Des taux d'application de la composition compris entre 0,05 et 10% par rapport au poids du fil sont convenables. On préfère des taux de 0,2 à 5% en poids, en particulier d'environ 1,5% en poids. Le fil à ensimer n'a pas besoin d'être étuvé au préalable.

Avantageusement, la composition est appliquée sur le fil dès la fabrication (fibrage) de ce dernier.

Dans l'étape (ii), le fil obtenu est traité avec une solution basique, de préférence de l'ammoniaque, afin de transformer le sel métallique déposé en hydroxyde métallique. Ce traitement peut s'effectuer :

- soit en continu sous forme d'un deuxième traitement lors du fibrage du fil :

  • Une solution basique de pH supérieure à 10 est déposée sur la ligne d'étirage soit par un rouleau d'ensimage juste après la dépose de la composition de l'invention, soit par pulvérisation sur les organes de réunissage et d'assemblage après la dépose de cette composition. Cette solution est préférentiellement une solution d'ammoniaque à 20% de pH de départ 13,2.

- soit par imprégnation des manchettes de fils à la sortie du fibrage et avant le bobinage :

  • Des manchettes sont totalement immergées dans une solution basique de pH supérieur à 10. Préférentiellement des manchettes d'un poids de fil de 500 à 1000 g sont immergées durant 7 mn dans une solution d'ammoniaque de pH compris entre 11 et 13,5. Les manchettes sont ensuite séchées durant environ 21 h afin d'obtenir un taux d'humidité compris entre 2% et 15% convenant à des opérations de bobinage.

- soit après tissage du fil, technique présentant peu d'intérêt en pratique car elle implique une opération supplémentaire après tissage :

  • Le tissu réalisé à partir du fil revêtu de la composition de l'invention est passé sur un système classique d'imprégnation par foulardage avec une vitesse de défilement de l'ordre de 10m/mn. Le bain d'imprégnation est constitué d'une solution basique de pH supérieur à 10, préférablement, une solution d'ammoniaque à 20% de pH 13,2.

Dans l'étape (iii), l'hydroxyde métallique est transformé en oxyde réfractaire par traitement thermique à température de 400°C à 1200°C pendant quelques dixièmes de seconde à 2 heures, les durées les plus courtes convenant aux températures les plus élevées et les durées les plus longues s'appliquant aux températures les plus basses, ou bien plus simplement lors de l'utilisation. Préférentiellement le tissu est traité thermiquement à environ 600 à 900°C pendant environ 0,1 à 60 secondes, par exemple en le faisant passer dans un four électrique ou à gaz.

Les exemples non limitatifs suivants sont donnés pour illustrer l'invention.

Dans les exemples, on a conduit tous les essais sur des fils assemblés 2 x 22 Tex, fil de base 14 micromètres, torsion 150S/160Z.

EXEMPLES

Les compositions des exemples de référence O et des exemples 1 à 12 récapitulées au tableau 1 ci-après, ont été appliquées sur des fils de silice. Les autres compositions ont été appliquées sur des fils dont la nature est indiquée dans le tableau 1. Les compositions ont été appliquées aux taux d'ensimage également indiqués dans le tableau 1, traitées à l'ammoniaque, puis les fils résultants ont été cuits à 800°C pendant 30 secondes environ dans un four. Les performances des fils obtenus sont aussi récapitulées au tableau 1. Les exemples de référence O, 13, 15 et 17 et les exemples 1 à 3 et 5 à 7 sont en dehors du cadre de l'invention et donnés à titre comparatif. Les exemples 4, 8 à 12, 14, 16 et 18 font partie de l'invention.

Les exemples de référence O, 13, 15 et 17 sont relatifs à des compositions dépourvues de sel métallique et n'assurent donc pas de protection thermique des fils à haute température. Les fils traités par ces compositions présentent une bonne ouvrabilité mais un comportement thermique médiocre, surtout dans le cas des fils de silice et de verre.

Les exemple comparatifs 1-3 et 5-7 montrent que, lorsqu'on sort des limites définies pour la composition de l'invention, la composition résultante est soit insatisfaisante du point de vue de son comportement thermique (cas de l'exemple 1 qui contient une proportion de sel métallique insuffisante, soit inacceptable en raison de sa mauvaise ouvrabilité (cas des exemples 2, 3, 5, 6, 7) due à une proportion de lubrifiant trop basse (exemple 2) ou trop élevée (exemple 5), une proportion de silane trop basse (exemple 3), une proportion de liant trop élevée (exemple 7) ou une proportion de sel métallique trop grande (exemple 6) Une "mauvaise ouvrabilité" signifie qu'il se produit de très nombreuses casses lors du bobinage et du tissage du fil, ou bien qu'il se produit un dépôt (bourre) ou un poudrage important, ou encore que le fil obtenu présente une forte pilosité.

Les exemples selon l'invention montrent, par contre, qu'on peut obtenir des fils présentant à la fois une bonne ouvrabilité et un comportement thermique très nettement supérieur (par un facteur de 1,4 à 4 fois) à celui des fils de référence.

Dans les exemples du tableau 1, le comportement thermique des fils a été évalué par des mesures de résistance à la rupture en traction. Pour cela, des éprouvettes préparées selon la norme ISO 3341 ont été soumises à des températures de 600, 800 et 1000°C pendant une durée d'une heure. Après retour à la température ambiante, la résistance à la rupture en traction a été mesurée selon la nombre ISO 3341. La résistance à la traction est donnée en MPa afin de tenir compte de la masse linéique et de la densité du matériau.

On a ainsi :

$$RT(MPa) = 1000 \text{ x densité x } RT \text{ (Newtons)/Titre(Tex), où}$$

Tex = masse en gramme pour 1000 mètres de fil. La densité est de 2,2.

On a également procédé à une évaluation du comportement thermique d'un tissu réalisé à partir d'un fil revêtu de la composition de l'exemple 4 et traité à l'ammoniaque. Ce fil a été tissé en un tissu satin de 8 ; 284 g/m$^2$, 22,04 fils en chaîne, 20,47 fils en trame, puis son revêtement d'hydroxyde de chrome a été converti en oxyde de chrome par cuisson à 800°C pendant 30 secondes.

La préparation des éprouvettes à partir de ce tissu ainsi que la détermination de la contrainte de rupture ont été effectuées conformément à la norme NF B38203. Les mesures ont été effectuées après retour à la température ambiante sur des éprouvettes de tissu soumises à des températures variant de 20 à 1200°C pendant une heure. Les résultats sont exprimés en % comparativement à la valeur initiale mesurée après traitement thermique de 1 heure à 400°C et retour à la température ambiante. La température de référence a été prise à 400°C, les agents liants organiques donnant de la cohésion au fil jusqu'à 400°C.

Les résultats obtenus sont résumés dans le tableau 2 ci-dessous :

| % Résiduel de résistance à la traction - référence 400°C | Tissu selon invention | Tissu standard* |
|---|---|---|
| 400°C | 100% | 100% |
| 600°C | 97% | 37,7% |
| 800°C | 58,9% | 26,7% |
| 1000°C | 42,6% | 24,17% |
| 1100°C | 30,2% | 16,4% |
| 1200°C | 24,5% | 15% |

* Tissu ensimé classique (sans sel métallique) de même armure et contexture que le tissu selon l'invention.

On voit que le tissu de l'invention conserve une plus grande résistance mécanique que le tissu standard lorsqu'il est soumis à des températures élevées.

On a également soumis le tissu précité ainsi que le tissu standard à des mesures de souplesse selon deux méthodes :

- <u>Mesure de souplesse par comptage des casses des filaments</u> :

On a découpé sur les tissus des éprouvettes de 10 cm de longueur et de 2 cm de largeur dans le sens de la chaîne. Ces éprouvettes ont été effilochées pour être mises droit fil. On les a soumises alors à une température de 1200°C pendant 0,5 heure. Finalement les éprouvettes ont été pliées sur un barreau de 1 mm de diamètre. On a compté les filaments cassés à la pliure.

Le tissu standard présente dans ce test un très grand nombre de filaments cassés, ce qui n'est pas le cas du tissu selon l'invention.

- <u>Mesure de souplesse des éprouvettes de tissus par mesure d'angle</u> :

On procède comme pour le test de casse pour préparer les diverses éprouvettes, puis on les soumet à une température de 1200°C pendant deux heures.

Après retour de l'échantillon à la température ambiante les échantillons de 10 cm de longueur, sont collés à une de leur extrémité sur un support rigide et sur une longueur de 2 cm.

On relève enfin l'angle que forment ces échantillons sous l'effet de leur propre poids, par rapport à la verticale, le support étant horizontal.

Dans un tel test, les éprouvettes du tissu selon l'invention forment un angle de l'ordre de 15°, alors que les éprouvettes comparatives forment un angle de 75°.

On a enfin soumis un tissu obtenu selon l'invention à un test de pénétration de flamme.

Il s'agit d'un test normalisé selon la Federal Aviation Administration et référencé Advising circular n° 20-135.

Un panneau anti-feu est confectionné sous forme de sandwich comprenant :

- sur sa partie supérieure : un tissu de silice (Satin de 8 ; 284 g/m$^2$ ; 22,04 fils en chaîne ; 20,47 fils en trame) revêtu de la composition selon l'invention et traité thermiquement ;
- sur sa partie centrale : un matériau fibreux isolant résistant à plus de 1200°C de type laine de quartz ;
- sur sa partie inférieure : un tissu de silice de type standard.

L'ensemble est ensaché dans un sac plastique haute température présentant sur la face correspondant à la partie supérieure du panneau anti-feu un revêtement aluminisé.

Ce panneau d'une dimension supérieure à 250 mm x 250 mm est soumis à la flamme d'un brûleur diésel. La température est mesurée à une distance de 6,35 mm de la face froide du panneau anti-feu (face non en contact avec la flamme du brûleur), et régulée à 1093°C ± 65°C.

La durée de l'essai est de 15 mm.

Après examen de l'échantillon, le panneau anti-feu a conservé son intégrité et des caractéristiques de souplesse suffisantes répondant aux exigences dudit test.

Un panneau anti-feu réalisé sur sa partie supérieure à partir d'un tissu de silice sans revêtement selon l'invention ne répond pas aux exigences dudit test en terme de souplesse.

## Tableau 1

| Revêtement | Référence O | Réf.O- % | Ex 1- nature | Ex 1 - % | Ex 2 – nature | Ex 2 - % | Ex 3 - nature | Ex 3 - % |
|---|---|---|---|---|---|---|---|---|
| SEL METALLIQUE | - | 0 | $CrCl_3$ | 5 | $CrCl_3$ | 10 | $CrCl_3$ | 15 |
| AGENT COLLANT | AMAIZO 5 | 10 | AMAIZO 2213 | 2,5 | AMAIZO 71 | 2,5 | DIOFAN A 564 S | 2,5 |
| SILANE | A187 | 0,5 | A1100 | 1,5 | A1100 | 2 | A1100 | 0,1 |
| LUBRIFIANT: huile 1 | NS 703 | 2 | NM1350 | 2 | Fiber Lubricant 9649 | 0,2 | NS 704 | 2 |
| huile 2 | - | 0 | - | 0 | AMMONY X LO | 0,2 | NM1350 | 1,5 |
| ADDITIFS: Cire | AMIWAX | 0,5 | Novepox TAN 117 | 0,3 | Novepox TAN 117 | 0,3 | Novepox TAN 117 | 0,5 |
| Plastifiant | Glycérine | 0,5 | Glycérine | 0,3 | - | 0 | Glycérine | 0,5 |
| OUVRABILITE | | bon | bon | x | difficile | x | difficile | x |
| COMPORTEMENT THERMIQUE | | référence | identique à référence | x | supérieur à référence | x | supérieur à référence | x |
| RT-600°C | | 124 | 147 | x | 283 | x | 382 | x |
| RT-800°C | | 83 | 54 | x | 315 | x | 338 | x |
| RT-1000°C | | 73 | 63 | x | 229 | x | 278 | x |
| Taux d'ensimage | | 2 % | . | 1,42 % | | 1,2 % | . | 1,32 % |

EP 0 727 396 B1

8

## Tableau 1 (suite)

| Revêtement | Ex 4 - nature | Ex 4 - % | Ex 5 - nature | Ex 5 - % | Ex 6 - nature | Ex 6 - % | Ex 7 - nature | Ex 7 - % |
|---|---|---|---|---|---|---|---|---|
| SEL METALLIQUE | $CrCl_3$ | 15 | $CrCl_3$ | 10 | $CrCl_3$ | 25 | $CrCl_3$ | 10 |
| AGENT COLLANT | ACRONA L 250 D | 3 | AMIDE 14 | 4 | ACRONAL 250 D | 3 | AMAIZO 2213 | 18 |
| SILANE | A1100 | 1 | A1100 | 1,5 | A1100 | 1 | A1100 | 2 |
| LUBRIFIANT: huile 1 | NS 703 | 2 | FIBER Lubricant 1498 | 10 | AMMONYX LO | 2 | NM 1350 | 2 |
| huile 2 | NS 704 | 3 | AMISIL | 8 | NS 704 | 3 | Fiber Lubricant 9649 | 3 |
| ADDITIFS: Cire | - | | AMIWAX | 0,1 | Novepox TAN 117 | 0,5 | AMIWAX | 0,5 |
| Plastifiant | - | | Glycérine | 0,5 | Glycérine | 0,5 | Glycérine | 0,5 |
| OUVRABILITE | bon | x | difficile | x | difficile | x | difficile | x |
| COMPORTEMENT THERMIQUE | supérieur à référence | x | supérieur à référence | x | supérieur à référence | x | supérieur à référence | x |
| RT-600°C | 378 | x | 306 | x | 275 | x | 374 | x |
| RT-800°C | 346 | x | 235 | x | 210 | x | 310 | x |
| RT-1000°C | 282 | x | 193 | x | 180 | x | 284 | x |
| Taux d'ensimage | | 1,38 % | | 1,36 % | | 3,4 % | | 3,9 % |

EP 0 727 396 B1

## Tableau 1 (suite)

| Revêtement | Ex 8 - nature | Ex 8 - % | Ex 9 - nature | Ex 9 - % | Ex 10 - nature | Ex 10 - % | Ex 11 - nature | Ex 11 - % |
|---|---|---|---|---|---|---|---|---|
| SEL METALLIQUE | Nitrate de Cr | 10 | Acétate de Zr | 10 | Sulfate de Cr | 10 | oxysulfate de Ti | 10 |
| AGENT LIANT | ACRONA L 250 D | 2 | AMIDE 14 | 3,5 | ACRONAL 250 D | 3 | AMIDE 14 | 3,5 |
| SILANE | A1100 | 1 | A186 | 1,1 | A187 | 1 | A1100 | 1,1 |
| LUBRIFIANT: huile 1 | NM 1350 | 6 | NS 703 | 2,2 | NS 704 | 2 | AMMONYX LO | 2,2 |
| huile 2 | - | 0 | - | 0 | AMISIL | 3 | - | 0 |
| ADDITIFS: Cire | AMIWAX | 0,2 | AMIWAX | 0,1 | Novepox TAN 117 | 0,5 | AMIWAX | 0,1 |
| Plastifiant | Glycérine | 0,5 | - | 0 | Glycérine | 0,5 | | 0 |
| OUVRABILITE | bon | x | bon | x | bon | x | bon | x |
| COMPORTEMENT THERMIQUE | supérieur à référence | x | supérieur à référence | x | supérieur à référence | x | supérieur à référence | x |
| RT-600°C | 240 | x | 263 | x | 375 | x | 267 | x |
| RT-800°C | 210 | x | 263 | x | 310 | x | 253 | x |
| RT-1000°C | 120 | x | 215 | x | 265 | x | 205 | x |
| Taux d'ensimage | | 1,63 % | | 1,72 % | | 1,45 % | | 1,92 % |

EP 0 727 396 B1

<u>Tableau 1 (suite)</u>

| Revêtement | Ex 12 - nature | Ex 12 - % | Ex 13 - nature Verre E - ref | Ex 13 - % | Ex 14 - nature Verre E traité | Ex 14 - % | Ex 15 - nature Silice sol-gel référence | Ex 15 - % |
|---|---|---|---|---|---|---|---|---|
| SEL METALLIQUE | $AlCl_3$ | 10 | - | 0 | $CrCl_3$ | 15 | - | 0 |
| AGENT LIANT | ACRONA L 250 D | 3 | AMAIZO 5 | 10 | ACRONAL 250 D | 3 | AMAIZO 5 | 10 |
| SILANE | A1100 | 1 | A187 | 0,5 | A1100 | 1 | A187 | 0,5 |
| LUBRIFIANT: huile 1 | NM 1350 | 2 | NS 703 | 2 | NS 703 | 2 | NS 703 | 2 |
| huile 2 | AMISIL | 3 | - | 0 | NS 704 | 3 | - | 0 |
| ADDITIFS: Cire | Cation X | 0,5 | AMIWAX | 0,5 | Novepox TAN 117 | 0,5 | AMIWAX | 0,5 |
| Plastifiant | Glycérine | 0,5 | Glycérine | 0,5 | Glycérine | 0,5 | Glycérine | 0,5 |
| OUVRABILITE | bon | x | bon | x | bon | x | bon | x |
| COMPORTEMENT THERMIQUE | supérieur à référence | x | référence Verre E | x | supérieur à référence | x | référence silice sol-gel | x |
| RT-600°C | 370 | x | 400°C = 270 | x | 400°C = 380 | x | 120 | x |
| RT-800°C | 300 | x | 600°C = 126 | x | 600°C = 200 | x | 70 | x |
| RT-1000°C | 255 | x | 700°C = 58 | x | 700°C = 120 | x | 50 | x |
| Taux d'ensimage | | 1,11 % | | 2,43 % | | 1,77 % | | 2,74 % |

## Tableau 1 (suite)

| Revêtement | Ex 16 - nature Silice sol-gel, traitée | Ex 16 - % | Ex 17 - nature Fil céramique: référence | Ex 17 - % | Ex 18 - nature Fil céramifiable traité | Ex 18 - % |
|---|---|---|---|---|---|---|
| SEL METALLIQUE | $CrCl_3$ | 15 | - | 0 | $CrCl_3$ | 15 |
| AGENT LIANT | ACRONAL 250 D | 3 | AMAIZO 5 | 10 | ACRONAL 250 D | 3 |
| SILANE | A1100 | 1 | A187 | 0,5 | A1100 | 1 |
| LUBRIFIANT: huile 1 | NS 703 | 2 | NS 703 | 2 | NS 703 | 2 |
| huile 2 | NS 704 | 3 | - | 0 | NS 704 | 3 |
| ADDITIFS: Cire | Novepox TAN 117 | 0,5 | AMIWAX | 0,5 | Novepox TAN 117 | 0,5 |
| Plastifiant | Glycérine | 0,5 | Glycérine | 0,5 | Glycérine | 0,5 |
| OUVRABILITE | bon | x | bon | x | bon | x |
| COMPORTEMENT THERMIQUE | supérieur à référence sol-gel | x | référence fil céramique | x | supérieur à référence Ex 17 | x |
| RT-600°C | 260 | x | 350 | x | 498 | x |
| RT-800°C | 250 | x | 340 | x | 518 | x |
| RT-1000°C | 240 | x | 320 | x | 524 | x |
| Taux d'ensimage | | 1,74 % | | 1,59 % | | 1,67 % |

EP 0 727 396 B1

**NOTES**

AMAIZO 5 : Amidon de pH 5 en solution à 33% en poids.

AMAIZO 71 : Amidon de pH 5 à 6, très filmogène, en solution à 33% en poids.

AMAIZO 2213 : Amidon de haute viscosité et de pH 5 à 6, en solution à 33% en poids.

DIOFAN A 564 S : Chlorure de vinylidène de pH 1,5 à 2,5.

ACRONAL 250 D : acrylate de pH 2 à 3,5 de Tg 24°C

AMIDE 14 : résine polyamide réactive d'une viscosité de 11,6 Pa.s à 250°C.

NS 703 : savon d'une viscosité de 12,6 mm$^2$/s à 40°C de pH = 6,3.

NS 704 : Huile de vaseline d'une viscosité de 18,8 mm$^2$/s à 40°C de pH = 7,55.

AMMONYX LO : Alkyl Diméthyl Amine.

NM 1350 : Diméthylpolysiloxane d'une viscosité de 350 mPa.s à 25°C.

AMISIL : émulsion de silicone.

FIBER LUBRICANT 1498 : polyalkylène glycol d'une viscosité de 33 mm$^2$/s à 21°C.

FIBER LUBRICANT 9649 : polyalkylène glycol d'une viscosité de 54 mm$^2$/s à 21°C.

A1100 : gamma-Aminopropyltriéthoxysilane.

A187 : gamma-glycidoxypropyltriméthoxysilane.

A186 : bêta-(3,4-époxycyclohexyl)éthyltriméthoxysilane.

AMEO : Aminopropyltriéthoxysilane.

Z6032 : silane de fonctionnalité vinylbenzylamine.

NOVEPOX TAN 117 : cire de polyoxyalkylène époxydé de point de fusion 40 à 50°C.

AMIWAX : cire de polyoxyéthylène glycol d'un poids moléculaire d'environ 300.

**Revendications**

1. Composition d'ensimage céramifiable caractérisée en ce qu'elle comprend en % en poids :

   a) 5,5 à 20% d'au moins un sel de métal hydrosoluble choisi parmi les sels de chrome, de zirconium, de titane et d'aluminium ;
b) 0,2 à 15% d'au moins un agent liant ;
c) 0,15 à 3% d'au moins un silane conférant au fil continu minéral de bonnes propriétés de résistance à l'abrasion et de résistance à la traction sur fil sec ;
d) 0,6 à 17% d'au moins un agent lubrifiant ; et
e) de l'eau pour le complément.

2. Composition selon la revendication 1, caractérisée en ce qu'elle contient, en outre, jusqu'à 2% en poids d'au moins un additif usuel.

3. Composition selon la revendication 1 ou 2, caractérisée en ce qu'elle comprend, en % en poids :

10-18% d'ingrédient (a),
1-6% d'ingrédient (b),
0,4-1,8% d'ingrédient (c),
1,5-10% d'ingrédient (d), cet ingrédient (d) étant constitué d'huile soluble à raison de 0,3 à 4% et d'huile émulsifiée à raison de O,3 à 6%,
0,1-1% de cire, et
0,1-1% de plastifiant, et
de l'eau pour le complément.

4. Composition selon la revendication 3, caractérisée en ce qu'elle comprend, en % en poids, environ :

15% d'ingrédient (a),
3% d'ingrédient (b),
1% d'ingrédient (c),
2% d'huile soluble,
3% d'huile émulsifiée,
0,5% de cire, et
0,5% de plastifiant, et
de l'eau pour le complément.

5. Procédé d'ensimage et de protection thermique de fils continus minéraux, caractérisé en ce qu'il comprend les étapes consistant à :

(i) appliquer une couche d'une composition telle que définie à l'une quelconque des revendications 1 à 4 sur un fil continu minéral ;
(ii) traiter le fil revêtu résultant avec une solution aqueuse basique pour convertir le sel de métal (a) en hydroxyde de métal ; et
(iii) chauffer le fil revêtu résultant de l'étape (ii) à une température supérieure à 400°C pendant un temps suffisant pour convertir l'hydroxyde de métal en oxyde de métal.

6. Procédé selon la revendication 5, caractérisé en ce qu'on applique la composition sur le fil à raison de 0,05 à 10% par rapport au poids du fil.

7. Procédé selon la revendication 6, caractérisé en ce qu'on applique la composition à raison de 0,2 à 5%.

8. Procédé selon la revendication 5, 6 ou 7, caractérisé en ce que la solution aqueuse basique est une solution d'ammoniaque.

9. Procédé selon l'une quelconque des revendications 5 à 8, caractérisé en ce que, dans l'étape (iii), on chauffe le fil à une température de 400 à 1200°C pendant quelques dixièmes de seconde à 2 heures.

10. Fil continu minéral revêtu d'une composition d'ensimage, caractérisé en ce que ladite composition est telle que définie à l'une quelconque des revendications 1 à 4.

**Claims**

1. A ceramizable sizing composition characterized in that it includes, in % by weight:

   a) 5.5 to 20 % of at least one water-soluble metal salt chosen from chromium, zirconium, titanium and aluminum salts;
   b) 0.2 to 15 % of at least one binding agent;
   c) 0.15 to 3 % of at least one silane giving the continuous inorganic yarn good properties of resistance to abrasion and of tensile strength of dry yarn;
   d) 0.6 to 17 % of at least one lubricating agent; and
   e) water for the complement.

2. The composition as claimed in claim 1, characterized in that it additionally contains up to 2 % by weight of at least one conventional additive.

3. The composition as claimed in claim 1 or 2, characterized in that it includes, in % by weight:

   10-18 % of ingredient (a),
   1-6 % of ingredient (b),
   0.4-1.8 % of ingredient (c),
   1.5-10 % of ingredient (d), this ingredient (d) consisting of soluble oil in a proportion of 0.3 to 4 % and of emulsified oil in a proportion of 0.3 to 6 %,
   0.1-1 % of wax, and
   0.1-1 % of plasticizer, and
   water for the complement.

4. The composition as claimed in claim 3, characterized in that it comprises, in % by weight, approximately:

   15 % of ingredient (a),
   3 % of ingredient (b),
   1 % of ingredient (c),
   2 % of soluble oil,
   3 % of emulsified oil,
   0.5 % of wax, and
   0.5 % of plasticizer, and
   water for the complement.

5. A process for sizing and heat protection of continuous inorganic yarns, characterized in that it includes the steps consisting in:

   (i) applying a layer of a composition such a defined in any of claims 1 to 4 to a continuous inorganic yarn ;
   (ii) treating the resulting coated yarn with a basic aqueous solution to convert the metal salt (a) into metal hydroxide; and
   (iii) heating the coated yarn resulting from step (ii) to a temperature above 400°C for a sufficient time to convert the metal hydroxide into metal oxide.

6. The process as claimed in claim 5, characterized in that the composition is applied to the yarn in a proportion of 0.05 to 10 % relative to the weight of the yarn.

7. The process as claimed in claim 6, characterized in that the composition is applied in a proportion of 0.2 to 5 %.

8. The process as claimed in claim 5, 6 or 7, characterized in that the basic aqueous solution is a solution of aqueous ammonia.

9. The process as claimed in of any of claims 5 to 8, characterized in that, in step (iii), the yarn is heated to a temperature of 400 to 1200°C for a few tenths of a second to 2 hours.

10. Continuous inorganic yarn coated with a ceramizable sizing composition characterized in that said composition is such as defined in any of claims 1 to 4.

**Patentansprüche**

1.  Keramifizierbare Schmälzzusammensetzung, dadurch gekennzeichnet, daß sie in Gew.-% enthält:

| | |
|---|---|
| a) mindestens ein wasserlösliches Metallsalz, das aus den Chrom-, Zirconium-, Titan- und Aluminiumsalzen ausgewählt ist | 5,5 bis 20% |
| b) mindestens ein Bindemittel | 0,2 bis 15% |
| c) mindestens ein Silan, das dem mineralischen Endlosfaden gute Eigenschaften der Abriebfestigkeit und der Zugfestigkeit am trockenen Faden verleiht | 0,15 bis 3% |
| d) mindestens ein Gleitmittel | 0,6 bis 17% |
| e) Wasser zur Ergänzung. | |

2.  Zusammensetzung nach Anspruch 1, dadurch gekennzeichnet, daß sie außerdem bis zu einem Anteil von 2 Gew.-% mindestens einen gebräuchlichen Zusatz enthält.

3.  Zusammensetzung nach Anspruch 1 oder 2, dadurch gekennzeichnet, daß sie in Gew.-% enthält:

    10 - 18%       Bestandteil (a),
    1 - 6%         Bestandteil (b),
    0,4- 1,8%      Bestandteil (c),
    1,5-10 %       Bestandteil (d), wobei dieser Bestandteil (d) aus löslichen Öl in einem Anteil von 0,3 bis 4% und aus emulgiertem Öl in einen Anteil von 0,3 bis 6% besteht,
    0,1- 1%        Wachs und
    0,1- 1%        Weichmacher und

    Wasser zur Ergänzung.

4.  Zusammensetzung nach Anspruch 3, dadurch gekennzeichnet, daß sie in Gew.-% etwa enthält:

    15% Bestandteil (a),
    3% Bestandteil (b),
    1% Bestandteil (c),
    2% lösliches Öl,
    3% emulgiertes Öl,
    0,5% Wachs und
    0,5% Weichmacher und
    Wasser zur Ergänzung.

5.  Verfahren zum Schmälzen und zum thermischen Schutz von mineralischen Endlosfäden, dadurch gekennzeichnet, daß es aus den folgenden Schritten besteht:

    i) Aufbringen einer Schicht einer Zusammensetzung nach einem der Ansprüche 1 bis 4 auf einen mineralischen Endlosfaden,
    ii) Behandlung des erhaltenen beschichteten Fadens mit einer basischen wässrigen Lösung zur Umwandlung des Metallsalzes (a) in Metallhydroxid und
    iii) Erhitzung des aus Schritt (ii) erhaltenen Fadens auf eine Temperatur von über 400°C während einer für die Umwandlung des Metallhydroxids in Metalloxid ausreichenden Zeit.

6.  Verfahren nach Anspruch 5, dadurch gekennzeichnet, daß die Zusammensetzung auf den Faden in einem Anteil von 0,05 bis 10%, bezogen auf das Gewicht des Fadens, aufgebracht wird.

7. Verfahren nach Anspruch 6, dadurch gekennzeichnet, daß die Zusammensetzung in einem Anteil von 0,2 bis 5% aufgebracht wird.

8. Verfahren nach Anspruch 5, 6 oder 7, dadurch gekennzeichnet, daß die basische wässrige Lösung eine Ammoniaklösung ist.

9. Verfahren nach einem der Ansprüche 5 bis 8, dadurch gekennzeichnet, daß man im Schritt (iii) den Faden während einigen Zehntel Sekunden bis 2 Stunden auf eine Temperatur von 400 bis 1200°C erhitzt.

10. Mit einer Schmälzzusammensetzung beschichteter mineralischer Endlosfaden, dadurch gekennzeichnet, daß diese Zusammensetzung so beschaffen ist, wie in einen der Ansprüche 1 bis 4 definiert ist.